# EUROPÄISCHE PATENTSCHRIFT

(11) **EP 2 363 698 B1**
(45) Veröffentlichungstag und Bekanntmachung des Hinweises auf die Patenterteilung: **05.12.2012**
(21) Anmeldenummer: 10179132.5
(22) Anmeldetag: 24.09.2010
(51) Int. Cl.: G01M 1/10

(54) **Momentenwaage**
Moment scale
Balance de moment

(30) Priorität: 02.03.2010 DE 102010009882
(43) Veröffentlichungstag der Anmeldung: 07.09.2011
(73) Patentinhaber: SIEMENS AKTIENGESELLSCHAFT, 80333 München (DE)
(72) Erfinder: Baum, Christian, 12309, Berlin (DE); Jahnke, Ronny, 14612, Falkensee (DE)

(56) Entgegenhaltungen:
- JP-A- 2000 046 675
- US-A- 5 083 463
- US-A- 5 195 363

## Beschreibung

Die Erfindung betrifft im Allgemeinen eine Messvorrichtung für eine Momentenwaage. Außerdem betrifft die Erfindung eine Momentenwaage, insbesondere eine Momentenwaage für Turbinenschaufeln und Verdichterschaufeln.

Bei der Messung von Momenten ist eine genaue Fixierung und Zentrierung der Messobjekte für eine genaue Messung wichtig. Dies führt in der Praxis meist dazu, dass für jedes Messobjekt eine eigene Messvorrichtung vorhanden sein muss. Solche Einrichtungen sind z.B. aus US 5 195 363 bekannt.

Bei der Bestimmung von Momentengewichten für Turbinen- und Verdichterlaufschaufeln oder -schaufeln müssen die zu wiegenden Schaufeln mittels einer Vorrichtung exakt auf der Momentenwaage fixiert werden. Die Schaufeln müssen am Fuß gespannt werden, da dort die einbaurelevanten Flächen liegen. Abhängig vom Typ und/oder von der Schwerpunktlage müssen unterschiedliche Schaufeln an unterschiedlichen Positionen fixiert werden. Aufgrund der Vielzahl von Schaufeltypen sind viele unterschiedliche Vorrichtungen erforderlich.

Es ist Aufgabe der Erfindung, die Momentenmessung von Messobjekten zu verbessern.

Diese Aufgabe wird erfindungsgemäß mit den Merkmalen der Ansprüche 1 beziehungsweise 12 gelöst.

Gemäß einem ersten Aspekt der Erfindung umfasst eine Messvorrichtung für eine Momentenwaage, eine Grundplatte mit mehreren Fixieröffnungen, eine drehbar an der Grundplatte angeordnete Aufnahmeplatte mit mehreren Aufnahmeöffnungen und Fixieröffnungen, eine an der Aufnahmeplatte angeordnete Fuß-Messaufnahme für ein Messobjekt, wobei die Messaufnahme in einen Teil der Aufnahmeöffnungen eingreift und mehrere Fixierstifte, welche die Messaufnahme in einer Messposition fixieren durch Eingriff in einen Teil der Fixieröffnungen in Grundplatte und Aufnahmeplatte. Die Messvorrichtung ist modular aufgebaut, so dass nicht die gesamte Vorrichtung für verschiedene Messungen gewechselt werden muss, sondern lediglich die Messaufnahme, was zu niedrigeren Vorrichtungskosten, geringeren zu bewegenden Massen und weniger benötigtem Regalvolumen für die Lagerung derzeit nicht verwendeter Messaufnahmen führt.

Bei der Messvorrichtung für eine Momentenwaage können die Aufnahmeöffnungen und Fixieröffnungen derart angeordnet sein, dass sie eine Verwechslungssicherung für verschiedene Messaufnahmen bilden. Das durch die Aufnahmeöffnungen und Fixieröffnungen gebildete Aufspannraster stellt durch eine geeignete Wahl oder Kodierung der Öffnungen einerseits und der Ausbildung der Messaufnahmen andererseits sicher, dass sich das Messobjekt bei der Messung immer in der exakten Messposition befindet. Falsche Positionierungen durch den Bediener sind damit ausgeschlossen, da sich in einem solchen Fall die Messaufnahme gar nicht aufbauen lässt oder die Messvorrichtung sich nicht in der Messposition fixieren lässt. Ein Sensor, der den Bediener warnt und/oder Hinweise gibt, wie die Messaufnahme zu befestigen ist, kann dies unterstützen. Die Aufnahmeöffnungen können zur Befestigung der Messaufnahme dienen während die Fixieröffnungen zur Kodierung (Verwechslungssicherung) dienen. Beide Typen von Öffnungen können in die Verwechslungssicherung einbezogen werden, so dass sich eine Vielzahl von Möglichkeiten für die verwechslungssichere Positionierung der Messaufnahmen ergibt.

Die Grundplatte kann drei Kontaktbereiche für drei Wägezellen der Momentenwaage aufweisen und die Messposition kann fix zu den drei Kontaktbereichen sein. Drei Kontaktbereiche erlauben eine vollständige Abdeckung der Messung in x-y-Ebene bei minimaler Anzahl der Kontaktbereiche bzw. Wägezellen. Durch die fixe Messposition zu den Kontaktbereichen kann sicher und reproduzierbar gemessen werden.

Die drei Kontaktbereiche können in einem gleichschenkligen Dreieck angeordnet sind. Dies erlaubt eine gute Positionierung von länglichen Messobjekten wie zum Beispiel Turbinenschaufeln.

Das Messobjekt kann in der Messposition entlang der Mittelsenkrechten zur Basis des gleichschenkligen Dreiecks orientiert sein. Diese Positionierung erlaubt eine gute Verteilung der Masse des Messobjekts auf die Kontaktbereiche bzw. Wägezellen.

Die Fixierstifte können verschiebbar in den Fixierlöchern der Aufnahmeplatte angeordnet sein. Dies vereinfacht die Handhabung, da die Fixierstifte stets in den Fixierlöchern der Aufnahmeplatte verbleiben können und bei Bedarf in die Fixierlöcher der Grundplatte verschoben werden. Die Fixierstifte können einen mit einer Feder vorgespannten Teil wie einen Stift oder eine Kugel haben, der dann in die Fixierlöcher der Grundplatte vorgeschoben wird und bei Nichtbenutzung wieder von der Feder in das Fixierloch der Aufnahmeplatte zurück bewegt wird.

Das Eingreifen der Fixierstifte (in die Grundplatte) kann durch das Einsetzen der Messaufnahme realisiert sein. Es kann ein Teil der Messaufnahme oder ein in die Messaufnahme eingesetzter (Kodier)Stift in das Fixierloch der Aufnahmeplatte eingreifen, wenn die Messaufnahme in die Aufnahmeplatte eingesetzt oder an ihr befestigt wird. Dadurch wird der Fixierstift oder ein Teil davon in das Fixierloch der Grundplatte bewegt, so dass Grundplatte und Aufnahmeplatte miteinander fixiert sind.

Die Messaufnahme kann ein horizontal verlaufendes zylinderförmiges Befestigungselement zum Eingriff in den Bereich zwischen Trag- und Freiflanke des Schaufelfußprofils (nachfolgend Schaufelbefestigungsnut genannt) einer zu messenden Turbinenschaufel und ein vertikal unterhalb des Befestigungselementes angeordneter Lagerbock für einen Schaufelfuß der zu messenden Turbinenschaufel umfassen. Diese selbst zentrierende Befestigung kommt ohne eine Spannschraube oder ähnliches aus. Somit werden Beschädigungen und/oder störende Messeinflüsse vermieden. Zudem ist Die Turbinenschaufel formschlüssig fixiert. Wegen des Formschlusses ist die Reproduzierbarkeit erheblich besser und ein Bedienereinfluss ist nicht nachweisbar. Insbesondere schwere Turbinenschaufeln werden in senkrechter Position mittels eines Krans bewegt. Die Messaufnahme ermöglicht das Abstellen der Turbinenschaufel in zunächst senkrechter Position auf dem Lagerbock und das Eindrehen der Turbinenschaufel in die Messposition mit gleichzeitiger Selbstzentrierung. Dies erleichtert die Handhabung der Turbinenschaufel.

Ein Gleitlager kann die zu messende Turbinenschaufel im Bereich des Schaufelfußes unterstützen. Das Gleitlager zum Beispiel in Form einer kugelgelagerten Rolle reduziert Reibungen beim Einlegen und/oder Eindrehen der zu messenden Turbinenschaufel. Dies erleichtert die Messung und verhindert Beschädigungen und/oder für die Messung störende Spannungen.

Das Gleitlager kann derart angeordnet sein, dass es die zu messende Turbinenschaufel im Bereich der Schaufelplattform unterstützt. Damit ist der Abstand zwischen dem Gleitlager und dem zylinderförmigen Befestigungselement derart optimiert, dass eine stabile Lagerung der Turbinenschaufel erzielt wird.

Die Messaufnahme kann eine vertikal verlaufende Aufnahmeöffnung für eine Verdichterschaufel aufweisen und Gleitlager können entlang der Aufnahmeöffnung angeordnet sein. Mit dieser Messaufnahme können auch Verdichterschaufeln vermessen werden, die wegen ihres speziellen Fußprofils nicht mittels zylinderförmigen Befestigungselements fixiert werden können. Mittels der Gleitlager kann eine Verdichterschaufel einfach und sicher in der Aufnahmeöffnung fixiert werden.

Die Messvorrichtung kann so ausgebildet sein, dass sich der Massenschwerpunkt einer eingelegten Turbinenschaufel im Wesentlichen über dem Schwerpunkt der Messvorrichtung befindet. Dadurch kann die Masse der Messvorrichtung im Vergleich zu Messvorrichtungen nach Stand der Technik, in denen eine Verschiebung des Gesamtschwerpunktes bei eingelegter Turbinenschaufel dadurch vermieden wird, dass die Masse der Messvorrichtung ähnlich oder größer als die Masse der Turbinenschaufel ist, verringert werden.

Gemäß einem zweiten Aspekt der Erfindung umfasst eine Momentenwaage mindestens eine Messvorrichtung wie zuvor beschrieben. Die Momentenwaage kann mehrere Messvorrichtungen oder Messaufnahmen umfassen. Dies ergibt ein Baukastensystem, das eine einfache Handhabung der Momentenwaage erlaubt.

Die Momentenwaage kann drei Wägezellen umfassen, welche in einem gleichschenkligen Dreieck angeordnet sind. Dies erlaubt eine gute Messung von länglichen Messobjekten wie zum Beispiel Turbinenschaufeln, die in einer Messaufnahme angeordnet sind.

Das Messobjekt kann in der Messposition entlang der Mittelsenkrechten zur Basis des gleichschenkligen Dreiecks orientiert sein. Diese Positionierung erlaubt eine gute Verteilung der Masse des Messobjekts auf die Wägezellen. Zudem ist durch diese feste Messposition eine Vergleichbarkeit der Messungen gegeben.

Im Folgenden wird die Erfindung anhand der Zeichnungen näher beschrieben, in denen zeigen:
- Figur 1: eine Grundplatte der Messvorrichtung gemäß der Erfindung;
- Figur 2: eine auf der Grundplatte angeordnete Aufnahmeplatte der Messvorrichtung gemäß der Erfindung;
- Figur 3: eine perspektivische Darstellung der Grundplatte und der Aufnahmeplatte der Messvorrichtung gemäß der Erfindung;
- Figur 4: eine perspektivische Darstellung der Messaufnahme auf der Aufnahmeplatte mit eingelegter Turbinenschaufel gemäß der Erfindung;
- Figur 5: eine Schnittdarstellung der Messvorrichtung gemäß der Erfindung;
- Figur 6: eine perspektivische Darstellung eines Fixierstiftes gemäß der Erfindung;
- Figur 7: eine perspektivische Darstellung der Messaufnahme auf der Aufnahmeplatte mit eingelegter Verdichterschaufel gemäß der Erfindung.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

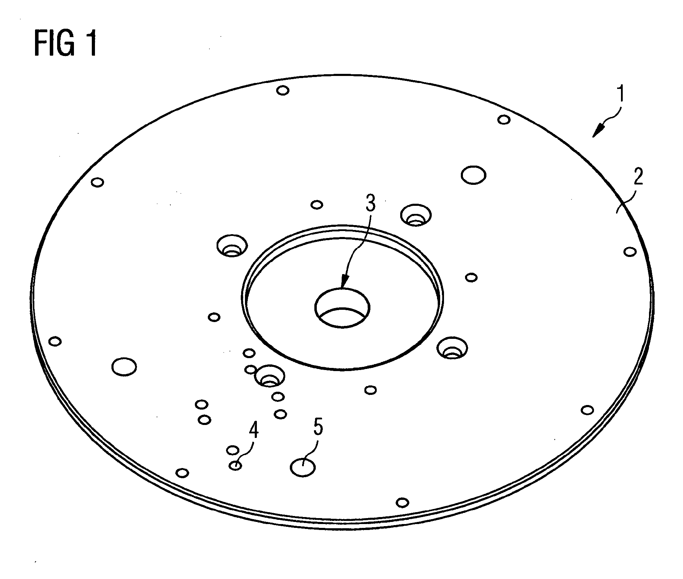

Figur 1 zeigt von der Messvorrichtung 1 eine scheibenförmige Grundplatte 2. Die Grundplatte 2 hat eine zentrale Öffnung 3 mit einer umlaufenden konzentrischen Ausnehmung. Die zentrale Öffnung 3 und die konzentrische Ausnehmung dienen zur Aufnahme einer in dieser Figur nicht dargestellten Aufnahmeplatte. Die Grundplatte 2 weist eine Vielzahl von Fixieröffnungen 4 auf. Die Fixieröffnungen 4 können entweder als Durchgangsbohrungen oder als Sackbohrungen ausgeführt sein. Die Fixieröffnungen 4 sind im Wesentlichen in einem Teilbereich der Grundplatte 2 angeordnet. Dieser Teilbereich dient zur Positionierung von Messaufnahmen, die in dieser Figur ebenfalls noch nicht dargestellt sind, in einer Messeposition.

An der Unterseite hat die Grundplatte 2 drei Kontaktbereiche 5, die zur Auflage für drei Wägezellen einer Momentenwaage ausgebildet sind. Die drei Kontaktbereiche 5 sind in einem gleichschenkligen Dreieck angeordnet. Die Fixieröffnungen 4 können bspw. innerhalb des gleichschenkligen Dreiecks und/oder entlang beziehungsweise symmetrisch zu der Mittelsenkrechten zur Basis des gleichschenkligen Dreiecks angeordnet. Die Kontaktbereiche 5 können speziell ausgebildete Bereiche der Grundplatte 2 wie beispielsweise Erhebungen oder Vertiefungen sein. Andererseits kann jeder Teil der Grundplatte 2 ein Kontaktbereich 5 sein, da jeder Teil der Grundplatte 2 auf einer Wägezelle aufliegen kann. Wenn die die Momentenwaage bereits eine eigene Grundplatte aufweist, die fest auf die Wägezellen montiert ist, kann die Grundplatte 2 der Messvorrichtung 1 auch auf der Grundplatte der Momentenwaage aufliegen. Die Kontaktbereiche 5 können dann entfallen, wobei die Grundplatte 2 der Messvorrichtung 1 dann vollflächig auf der Grundplatte der Momentenwaage aufliegt.

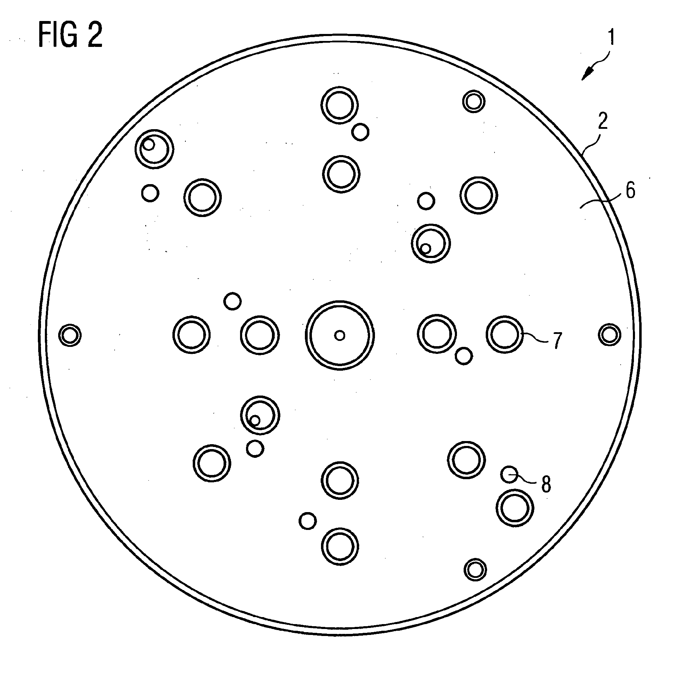

Figur 2 zeigt von der Messvorrichtung für eine Momentenwaage 1 die Grundplatte 2 sowie eine drehbar an der Grundplatte 2 befestigte Aufnahmeplatte 6. Die Aufnahmeplatte 6 hat mehrere über die gesamte Oberfläche der Aufnahmeplatte 6 verteilte Aufnahmeöffnungen 7. Weiterhin weist die Aufnahmeplatte 6 Fixieröffnungen 8 auf, welche ebenfalls über die Oberfläche der Aufnahmeplatte 6 verteilt sind. Die Anordnung von Aufnahmeöffnungen 7 und/oder Fixieröffnungen 8 ist derart gewählt, dass sie ein verwechslungssicheres Aufspannraster für eine Messaufnahme bilden.

Beispielsweise können jeweils 2 Aufnahmeöffnungen 7 und eine Fixieröffnung 8 einer Messaufnahme zugeordnet sein. Dabei kann die Ausrichtung der beiden Aufnahmeöffnungen 7 zu einander fix sein. Die Position der beiden Aufnahmeöffnungen 7 auf der Oberfläche der Aufnahmeplatte 6 kann jedoch variieren, beispielsweise in radialem Abstand zur Mitte der Aufnahmeplatte 6 und/oder mittels einer Rotation bezüglich des Radius. Die beiden Aufnahmeöffnungen 7 können einen unterschiedlichen Durchmesser aufweisen. Auf diese Weise kann allein mithilfe der Aufnahmeöffnungen 7 eine Kodierung beziehungsweise Verwechslungssicherheit für die Messaufnahmen sichergestellt werden. Konkret bedeutet dies, dass eine Messaufnahme für ein bestimmtes Messobjekt nur in einer bestimmten Position auf der Aufnahmeplatte 6 befestigt werden kann. Nach Befestigung der Messaufnahme kann dann die Aufnahmeplatte 6 in die Messposition gedreht werden, so dass das Messobjekt derart zwischen den Kontaktbereichen 5 beziehungsweise den Wägezellen angeordnet ist, dass eine sichere und reproduzierbare Messung gewährleistet ist.

Die Fixieröffnungen 8 können ebenfalls in das Konzept der Verwechslungssicherheit einbezogen werden. Dies erhöht die Anzahl an eindeutigen Positionierungen für die Messaufnahmen.

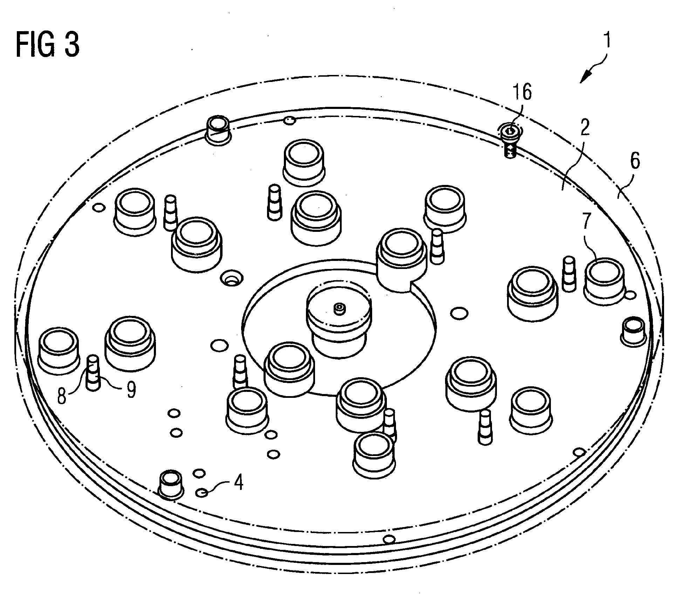

Figur 3 zeigt eine perspektivische, teilweise transparente Darstellung der Grundplatte 2 mit daran befestigter Aufnahmeplatte 6, wobei die Aufnahmeplatte 6 transparent dargestellt ist. Es ist zu erkennen, dass die Fixieröffnungen 4 der Grundplatte 2 mit jeweils einer Fixieröffnung 8 der Aufnahmeplatte 6 durch Drehung der Aufnahmeplatte 6 zu einander ausgerichtet werden können. In den Fixieröffnungen 8 der Aufnahmeplatte 6 sind Fixierstifte 9 angeordnet. Die Fixierstifte 9 sind in den Fixieröffnungen 8 derart befestigt, dass sie nicht über die Oberfläche der Aufnahmeplatte 6 hervor ragen. Ein federbelasteter Kugelmechanismus 10 kann verwendet werden, um ein Einrasten in den vorgesehenen Messpositionen zu erreichen. An der Aufnahmeplatte 6 und/oder der Grundplatte 2 kann vorzugsweise an der Umfangsfläche eine Skala oder Markierung vorgesehen sein, mit der die jeweilige Messaufnahme in die Messposition gebracht werden kann.

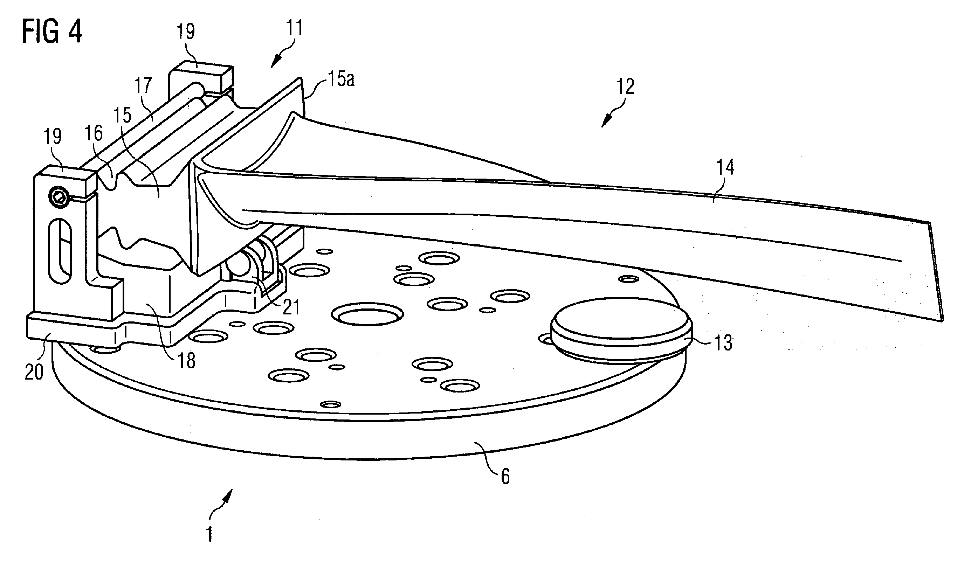

Figur 4 zeigt die Messvorrichtung 1 mit einer Messaufnahme 11, in die eine Turbinenschaufel 12 eingelegt ist. Ein Gegengewicht 13 ist an der Aufnahmeplatte 6 gegenüberliegend von der Messaufnahme 11 befestigt.

Die Turbinenschaufel 12 besteht aus einem Schaufelblatt 14 und einem Schaufelfuß 15. Der Schaufelfuß 15 hat ein so genanntes Tannenbaumprofil Zwischen Trag- und Freiflanke des Tannenbaumprofils bildet sich jeweils ein nutförmiger Bereich (Schaufelbefestigungsnut 16) aus.

Die Messaufnahme 11 weist ein horizontal verlaufendes zylinderförmiges Befestigungselement 17 auf, das in eine der Schaufelbefestigungsnuten 16 eingreift. Vertikal unterhalb des Befestigungselementes 17 ist eine Basisplatte 20 mit einem Lagerbock 18 angeordnet, dessen Funktion weiter untern erklärt werden wird.. Das Befestigungselement 17 ist mittels zweier seitlich an der Basisplatte 20 der Messaufnahme 11 angeordneten Halterungen 19 befestigt. Die Basisplatte 20 ist mittels eines Teils der Aufnahmeöffnungen 7 an der Aufnahmeplatte 6 befestigt.

Gegenüberliegend von dem Befestigungselement 17 ist an der Basisplatte 20 ein Gleitlager 21 angeordnet. Gegenüberliegend meint in montiertem Zustand der Messaufnahme 11 radial innen liegend. Das Gleitlager 21 ist hier in Form einer kugelgelagerten Rolle realisiert. Der Abstand in radialer Richtung zwischen dem Befestigungselement 17 und dem Gleitlager 21 ist derart bemessen, dass die Turbinenschaufel 14 in eingelegtem Zustand mit ihrer Schaufelplattform 15a auf dem Gleitlager 21 aufliegt.

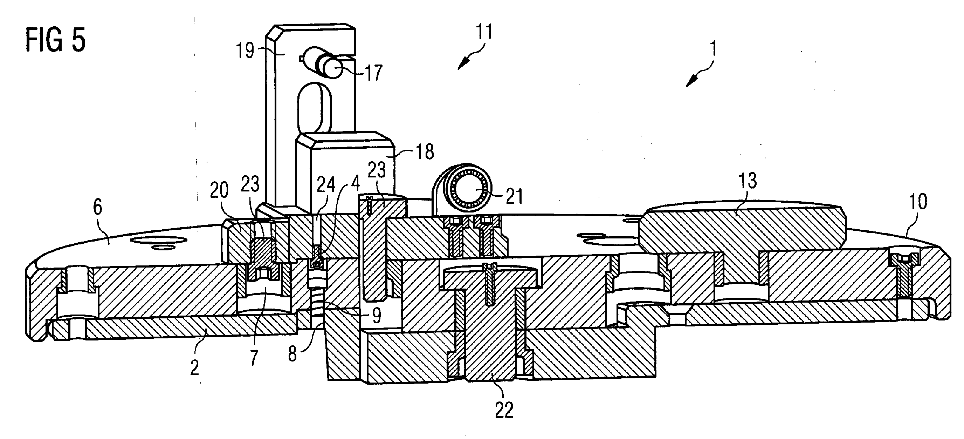

Figur 5 zeigt eine Schnittdarstellung der in Figur 4 gezeigten Messvorrichtung 1, wobei zur besseren Übersicht die Turbinenschaufel nicht dargestellt ist. Die Aufnahmeplatte 6 ist drehbar mit einem Bolzen 22 zentral an der Grundplatte 2 befestigt. Die Messaufnahme 11 ist mit zwei Aufnahmestiften 23, welche in zwei Aufnahmeöffnungen 7 der Aufnahmeplatte 6 eingreifen, befestigt. Der Aufnahmestift 23 kann von unten in die Basisplatte 20 der Messaufnahme 11 eingefügt sein oder er kann durch eine Bohrung in der Basisplatte 20 von oben durch die Basisplatte 20 in die Aufnahmeplatte 6 gesteckt werden. Der Aufnahmestift 23 kann auch einstückig mit der Basisplatte 20 ausgebildet sein. Eine oder beide Aufnahmestifte 23 können mit einem Schraubverschluss, einem Bajonettverschluss, einem Ball-Lock System, oder ähnlichem versehen sein, um die Messaufnahme 11 auf der Aufnahmeplatte 6 zu sichern. Das Gegengewicht 13 ist in einer Aufnahmeöffnung 7 angeordnet, welche der Messaufnahme 11 im vorliegenden Ausführungsbeispiel radial gegenüber liegt. Alternative Lagen eines oder mehrerer Gegengewichte sind aber auch möglich, solange dass mindestens das Gegengewicht bzw. die Gegengewichte in der Lage sind, das Gewicht der Messaufnahme auszugleichen.

Insgesamt ist die Messvorrichtung so ausgestaltet, dass sich der Massenschwerpunkt einer eingelegten Schaufel im Wesentlichen über dem Schwerpunkt der Messvorrichtung befindet. Im Wesentlichen über dem Schwerpunkt der Messvorrichtung soll hierbei so zu verstehen sein, dass kleinere Abweichungen der Lage des Massenschwerpunktes einer eingelegten Schaufel von der Position über dem Schwerpunkt der Messvorrichtung die Lage des Gesamtschwerpunktes der Kombination aus Messvorrichtung und Schaufel im Vergleich zur Abmessung der Messvorrichtung weitgehend unbeeinflusst lässt.

Kleine Abweichungen der Lage des Masseschwerpunkt von dem Schwerpunkt der Messvorrichtung sind dabei nicht störend, solange der Masseschwerpunkt über einem kreisförmigen Bereich liegt, der den Schwerpunkt der Messvorrichtung umgibt und dessen Radius etwa 30% des Radius der Grundplatte 2, vorzugsweise etwa 15% des Radius der Grundplatte 2, nicht überschreitet. Dadurch kann die Masse der Messvorrichtung im Vergleich zu Messvorrichtungen nach Stand der Technik geringer gehalten werden, da eine Verschiebung des Gesamtschwerpunktes bei Einlegen einer Turbinenschaufel statt durch das Messverhältnis von Messvorrichtung zu Turbinenschaufel durch die Lage der Schwerpunkte relativ zueinander vermieden wird, was die Handhabbarkeit der Messvorrichtung verbessert. Die korrekte Lage des Schwerpunktes unterschiedlicher Turbinenschaufeln im Wesentlichen über dem Schwerpunkt der Messvorrichtung wird dabei dadurch sichergestellt, dass die Aufnahmeöffnungen 7 und Fixieröffnungen 4, 8 derart angeordnet sind, dass sie eine Verwechslungssicherung für verschiedene, jeweils einer anderen Art von Turbinenschaufel zugeordneten Messaufnahmen 11 bilden.

Der Fixierstift 9 ist in der Fixieröffnung 8 der Aufnahmeplatte 6 befestigt. Ein Kodierstift 24 ist an der Unterseite der Basisplatte 20 derart befestigt, dass er in montiertem Zustand der Messaufnahme 11 in die Fixieröffnung 8 der Aufnahmeplatte 6 eingreift. Dadurch wird der Fixierstift 9 oder ein Teil des Fixierstiftes 9 in die Fixieröffnung 4 der Grundplatte 2 gedrückt.

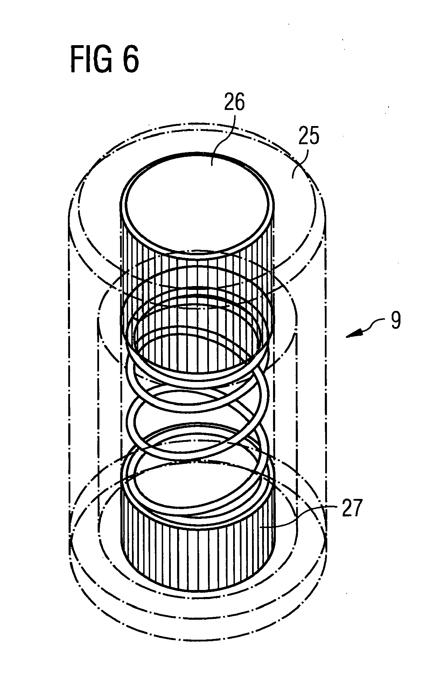

Figur 6 zeigt den Fixierstift 9 im Detail. Der Fixierstift 9 hat einen Außenzylinder 25, der in die Fixieröffnungen 8 der Aufnahmeplatte 6 zum Beispiel eingepresst wird. Dazu kann der Außenzylinder 25 eine konische Mantelfläche aufweisen. In dem Außenzylinder 25 ist ein Innenzylinder 26 in axialer Richtung beweglich angeordnet, welcher den eigentlichen Stift bildet. Der Innenzylinder (Stift) 26 ist mit einer Feder 27 vorgespannt, so dass die Stirnseiten des Außenzylinders 25 und des Innenzylinders 26 zumindest annähernd plan sind. Durch den Kodierstift 24 wird der Innenzylinder 26 um die Länge des Kodierstiftes 24 aus dem Außenzylinder 25 heraus geschoben. Wird der Kodierstift 24 wieder entfernt, drückt oder zieht die Feder 27 den Innenzylinder 26 wieder in den Außenzylinder 25.

Im Folgenden wird anhand von Figur 5 die Handhabung der Messvorrichtung 1 beschrieben. Zunächst wird für das Messobjekt die passende Messaufnahme 11 ausgewählt. Dies kann durch eine Beschriftung der Messaufnahme 11 oder die Verwendung einer Liste gegebenenfalls mit Kodierung der Messaufnahme 11 erleichtert werden. Als nächstes wird die Aufnahmeplatte 6 in die Messposition gedreht, das heißt derart dass sich die Aufnahmeöffnung 7 und die Fixieröffnung 8 für diese bestimmte Messaufnahme 11 in der Messposition befinden. Dies kann durch eine Skalierung oder Markierung an der Aufnahmeplatte 6 und/oder der Grundplatte 2 sowie den federbelasteten Kugelmechanismus 10, der ein Einrasten in festen Positionen erzwingt, erleichtert werden. Die Grundplatte 2 und damit auch die Aufnahmeplatte 6 ist bereits auf der Momentenwaage befestigt. Nun wird die Messaufnahme 11 an der Aufnahmeplatte 6 befestigt. Dabei greifen die Aufnahmestifte 23 der Messaufnahme 11 in die Aufnahmeöffnung 7 der Aufnahmeplatte 6 ein. Der Kodierstift 24 greift gleichermaßen in die Fixieröffnung 8 der Aufnahmeplatte 6 ein. Nur wenn alle drei genannten Steckverbindungen genau ineinandergreifen lässt sich die Messaufnahme 11 an der Aufnahmeplatte 6 befestigen. Dadurch wird eine Verwechslungssicherung realisiert, welche den Einfluss des Bedieners minimiert.

Der Kodierstift 24 der Messaufnahme 11 drückt einen Teil des Fixierstiftes 9 in die Fixieröffnung 4 der Grundplatte 2. Dadurch wird die Aufnahmeplatte 6 mit der Grundplatte 2 fixiert, so dass sich die Aufnahmeplatte 6 und die Grundplatte 2 nicht mehr gegeneinander verdrehen lassen. Mittels des Spannelements 22 wird nun die Aufnahmeplatte 6 vollständig fixiert. Das zu der Messaufnahme 11 dazugehörige Gegengewicht 13 wird in eine entsprechende Aufnahmeöffnung 7 der Grundplatte 2 eingesetzt.

Die Turbinenschaufel 12 wird jetzt in die Messaufnahme 11 eingeführt (siehe auch Figur 4). Die Turbinenschaufel 12 kann in die Messaufnahme 11 eingelegt werden, indem sie mit dem Schaufelfuß auf den Lagerbock 18 aufgesetzt und mit dem Schaufelblatt in Richtung auf die Aufnahmeplatte 6 gekippt wird. Hierbei kann die Turbinenschaufel 12 in einer nahezu waagerechten Orientierung auf den Lagerbock 18 aufgesetzt werden, was insbesondere bei leichten Schaufeln möglich ist. Die Turbinenschaufel 12 kann aber auch in senkrechter Orientierung auf dem Lagerbock 18 der Messaufnahme 11 aufgesetzt werden, was insbesondere bei schweren Turbinenschaufeln vorteilhaft ist, da diese häufig unter Zuhilfenahme eines Krans bewegt werden, wobei sie üblicherweise in einer senkrechten Orientierung (Schaufelfuß unten) am Kran hängen. Aber auch das Aufsetzen auf den Lagerbock 18 eine einer Orientierung im Bereich zwischen den genannten Orientierungen ist möglich. Nachdem die Turbinenschaufel 12 auf den Lagerbock aufgesetzt worden ist, wird sie in die waagerechte Lage gekippt und dabei in Ihre Endposition geführt. In der Endposition kommt die Schaufelbefestigungsnut 16 mit dem Befestigungselement 17 zur Anlage, wobei sich die Schaufelplattform 15a auf dem Gleitlager 21 abstützt. Nachdem die Turbinenschaufel 12 in die waagerechte Lage gekippt worden ist, hat sie keinen Kontakt mehr mit dem Lagerbock 18. Jetzt werden Momente und/oder Massenverteilungen der Turbinenschaufel 12 mit der Momentenwaage vermessen.

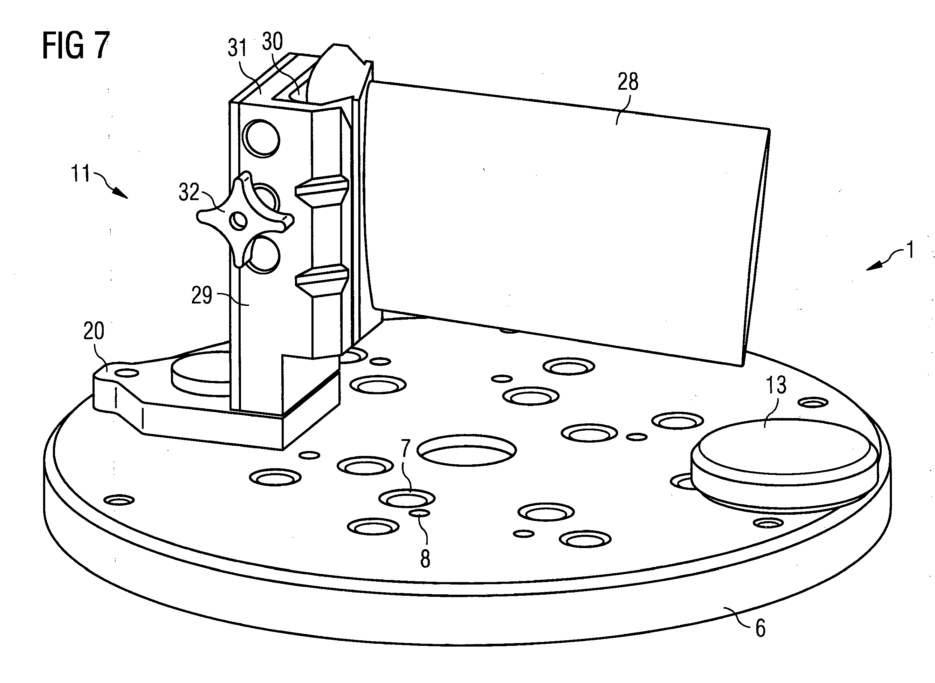

Figur 7 zeigt die Messvorrichtung 1 mit einer Messaufnahme 11 für eine Verdichterschaufel 28. Die Grundplatte 2 und die Aufnahmeplatte 6 sind identisch mit der Messvorrichtung 1 für die Turbinenschaufel 12. Dies entspricht dem modularen Konzept der Erfindung. Die Aufnahmeplatte 6 und die Grundplatte 2 sind entsprechend kodiert, um eine Vielzahl von Messaufnahmen 11 verwechslungssicher aufzunehmen. Sollte zum Beispiel die Anzahl der Messaufnahmen größer sein als die auf der Oberfläche der Aufnahmeplatte 6 verfügbaren Kombinationen von Aufnahmeöffnung 7 und Fixieröffnungen 8 können auch mehrere Aufnahmeplatten 6 zum Einsatz kommen.

Die Messaufnahme 11 umfasst eine Basisplatte 20, auf der eine Halterung 29 im Wesentlichen vertikal befestigt ist. In der Halterung ist eine Aufnahmeöffnung 30 ausgebildet, in die ein Fuß der Verdichterschaufel 28 eingeführt wird. In der Aufnahmeöffnung 30 sind mehrere Gleitlager 31 angeordnet, welche das Einlegen der Verdichterschaufel 28 in die Messaufnahme 11 erleichtern. Mittels eines Exzenters 32 wird nun der Fuß der Verdichterschaufel 28 in der Aufnahmeöffnung 30 verspannt, so dass die Verdichterschaufel 28 befestigt ist.

Die Handhabung der in Figur 7 gezeigten Messaufnahme ist identisch mit der Handhabung der in Figur 5 gezeigten Messaufnahme.

## Patentansprüche

1. Messvorrichtung für eine Momentenwaage,
aufweisend
eine Grundplatte (2) mit mehreren Fixieröffnungen (4), **dadurch gekennzeichnet, dass** die Messvorrichtung eine drehbar an der Grundplatte (2) angeordnete Aufnahmeplatte (6) mit mehreren Aufnahmeöffnungen (7) und Fixieröffnungen (8),
eine an der Aufnahmeplatte (6) angeordnete Messaufnahme (11) für ein Messobjekt (12, 28) aufweist, wobei die Messaufnahme (11) in einen Teil der Aufnahmeöffnungen (7) eingreift, und dass die Messvorrichtung mehrere Fixierstifte (9) aufweist, welche die Messaufnahme (11) in einer Messposition durch Eingriff in einen Teil der Fixieröffnungen (4, 8) in Grundplatte (2) und Aufnahmeplatte (6) fixieren.

2. Messvorrichtung für eine Momentenwaage nach Anspruch 1, wobei die Aufnahmeöffnungen (7) und Fixieröffnungen (4, 8) derart angeordnet sind, dass sie eine Verwechslungssicherung für verschiedene Messaufnahmen (11) bilden.

3. Messvorrichtung für eine Momentenwaage nach Anspruch 1 oder 2,
wobei die Grundplatte (2) drei Kontaktbereiche (5) für drei Wägezellen der Momentenwaage aufweist und wobei die Messposition fix zu den drei Kontaktbereichen (5) ist.

4. Messvorrichtung für eine Momentenwaage nach Anspruch 3, wobei die drei Kontaktbereiche (5) in einem gleichschenkligen Dreieck angeordnet sind.

5. Messvorrichtung für eine Momentenwaage nach Anspruch 4, wobei das Messobjekt (12, 28) in der Messposition entlang der Mittelsenkrechten zur Basis des gleichschenkligen Dreiecks orientiert ist.

6. Messvorrichtung für eine Momentenwaage nach einem der Ansprüche 1 bis 5,
wobei die Fixierstifte (9) verschiebbar in den Fixierlöchern (8) der Aufnahmeplatte (6) angeordnet sind.

7. Messvorrichtung für eine Momentenwaage nach einem der Ansprüche 1 bis 6,
wobei das Eingreifen der Fixierstifte (9) durch Einsetzen der Messaufnahme (11) realisiert ist.

8. Messvorrichtung für eine Momentenwaage nach einem der Ansprüche 1 bis 7,
wobei die Messaufnahme (11) ein horizontal verlaufendes zylinderförmiges Befestigungselement (17) zum Eingriff in eine Schaufelbefestigungsnut (16) einer zu messenden Turbinenschaufel (12) und ein vertikal unterhalb des Befestigungselementes (17) angeordneter Lagerbock (18) für einen Schaufelfuß (15) der zu messenden Turbinenschaufel (12) aufweist.

9. Messvorrichtung für eine Momentenwaage nach Anspruch 8, wobei ein Gleitlager (21) die zu messende Turbinenschaufel (12) im Bereich des Schaufelfußes (15) unterstützt.

10. Messvorrichtung für eine Momentenwaage nach Anspruch 9, wobei das Gleitlager (21) derart angeordnet ist, dass es die zu messende Turbinenschaufel (12) im Bereich der Schaufelplattform (15a) unterstützt.

11. Messvorrichtung für eine Momentenwaage nach einem der Ansprüche 1 bis 7,
wobei die Messaufnahme (11) eine vertikal verlaufende Aufnahmeöffnung (30) für eine Verdichterschaufel (28) aufweist und wobei Gleitlager (31) entlang der Aufnahmeöffnung (30) angeordnet sind.

12. Messvorrichtung für eine Momentenwaage nach einem der Ansprüche 1 bis 7,
wobei sich der Massenschwerpunkt einer eingelegten Turbinenschaufel (12) im Wesentlichen über dem Schwerpunkt der Messvorrichtung befindet.

13. Momentenwaage mit mindestens einer Messvorrichtung gemäß einem der Ansprüche 1 bis 12.

14. Momentenwaage nach Anspruch 13,
aufweisend drei Wägezellen, welche in einem gleichschenkligen Dreieck angeordnet sind.

15. Momentenwaage nach Anspruch 14,
wobei das Messobjekt (12, 28) in der Messposition entlang der Mittelsenkrechten zur Basis des gleichschenkligen Dreiecks orientiert ist.

## Claims

1. Measuring device for a moment weighing system, having a base plate (2) with a plurality of fixing openings (4), **characterized in that** the mearured device has a receiving plate (6), arranged rotatably on the base plate (2), having a plurality of receiving openings (7) and fixing openings (8),
a measurement receptacle (11), arranged on the receiving plate (6), for a measurement object (12, 28), with the measurement receptacle (11) engaging in part of the receiving openings (7),
and **in that** the measuring device has a plurality of fixing pins (9) which fix the measurement receptacle (11) in a measurement position by way of engagement in part of the fixing openings (4, 8) in the base plate (2) and receiving plate (6).

2. Measuring device for a moment weighing system according to Claim 1, wherein the receiving openings (7) and fixing openings (4, 8) are arranged such that they form a protection against incorrect placement for different measurement receptacles (11).

3. Measuring device for a moment weighing system according to Claim 1 or 2, wherein the base plate (2) has three contact regions (5) for three load cells of the moment weighing system and wherein the measurement position is fixed relative to the three contact regions (5).

4. Measuring device for a moment weighing system according to Claim 3, wherein the three contact regions (5) are arranged in an isosceles triangle.

5. Measuring device for a moment weighing system according to Claim 4, wherein the measurement object (12, 28), in the measurement position, is orientated along the perpendicular bisector of the base of the isosceles triangle.

6. Measuring device for a moment weighing system according to one of Claims 1 to 5, wherein the fixing pins (9) are arranged in the fixing holes (8) of the receiving plate (6) such that they can be displaced.

7. Measuring device for a moment weighing system according to one of Claims 1 to 6, wherein the measurement receptacle (11) is inserted by way of the engagement of the fixing pins (9).

8. Measuring device for a moment weighing system according to one of Claims 1 to 7, wherein the measurement receptacle (11) has a horizontal cylindrical attachment element (17) for engagement into a blade attachment groove (16) of a turbine blade (12) to be measured and a bearing block (18), arranged vertically below the attachment element (17), for a blade root (15) of the turbine blade (12) to be measured.

9. Measuring device for a moment weighing system according to Claim 8, wherein a slide bearing (21) supports the turbine blade (12) to be measured in the region of the blade root (15).

10. Measuring device for a moment weighing system according to Claim 9, wherein the slide bearing (21) is arranged such that it supports the turbine blade (12) to be measured in the region of the blade platform (15a).

11. Measuring device for a moment weighing system according to one of Claims 1 to 7, wherein the measurement receptacle (11) has a vertical receiving opening (30) for a compressor blade (28) and wherein slide bearings (31) are arranged along the receiving opening (30).

12. Measuring device for a moment weighing system according to one of Claims 1 to 7, wherein the center of mass of an inserted turbine blade (12) is located substantially over the center of gravity of the measuring device.

13. Moment weighing system having at least one measuring device according to one of Claims 1 to 12.

14. Moment weighing system according to Claim 13, having three load cells which are arranged in an isosceles triangle.

15. Moment weighing system according to Claim 14, wherein the measurement object (12, 28), in the measurement position, is orientated along the perpendicular bisector of the base of the isosceles triangle.

## Revendications

1. Dispositif de mesure pour une balance de moment,
comprenant
une plaque (2) d'assise ayant plusieurs ouvertures (4) d'immobilisation, **caractérisé en ce que** le dispositif de mesure a une plaque (6) de réception montée tournante sur la plaque (2) d'assise et ayant plusieurs ouvertures (7) de réception et ouvertures (8) d'immobilisation,
un logement (11) de mesure, disposé sur la plaque (6) de réception et destiné à un objet (12, 28) à mesurer, le logement (11) de mesure pénétrant dans une partie des ouvertures (7) de réception et **en ce que** le dispositif de mesure a plusieurs broches (9) d'immobilisation, qui immobilisent le logement de mesure en une position de mesure en pénétrant dans une partie des ouvertures (4, 8) d'immobilisation de la plaque (2) d'assise et de la plaque (6) de réception.

2. Dispositif de mesure pour une balance de moment suivant la revendication 1, dans lequel les ouvertures (7) de réception et les ouvertures (4, 8) d'immobilisation sont disposées de manière à former un détrompeur pour des logements (11) de mesure différente.

3. Dispositif de mesure pour une balance de moment suivant la revendication 1 ou 2, dans lequel la plaque (2) d'assise a trois zones (5) de contact pour trois cellules de la bascule de moment et la position de mesure est fixe par rapport aux trois zones (5) de contact.

4. Dispositif de mesure pour une balance de moment suivant la revendication 3, dans lequel les trois zones (5) de contact sont disposées suivant un triangle isocèle.

5. Dispositif de mesure pour une balance de moment suivant la revendication 4, dans lequel l'objet (12, 28) à mesurer est, dans la position de mesure, orienté le long de la médiatrice de la base du triangle isocèle.

6. Dispositif de mesure pour une balance de moment suivant l'une des revendications 1 à 5, dans lequel les broches (9) d'immobilisation sont montées coulissantes dans les trous (8) d'immobilisation de la plaque (6) de réception.

7. Dispositif de mesure pour une balance de moment suivant l'une des revendications 1 à 6, dans lequel la pénétration des broches (9) d'immobilisation est réalisée en entrant dans le logement (11) de mesure.

8. Dispositif de mesure pour une balance de moment suivant l'une des revendications 1 à 7, dans lequel le logement (11) de mesure a un élément de fixation de forme cylindrique et s'étendant horizontalement, pour la pénétration dans une rainure (16) de fixation d'aube d'une aube (12) de turbine à mesurer, et un sabot (18) disposé verticalement sous l'élément (17) de fixation, pour une emplanture (15) d'aube de l'aube (12) de turbine à mesurer.

9. Dispositif de mesure pour une balance de moment suivant la revendication 8, dans lequel un palier (21) lisse supporte l'aube (12) de turbine à mesurer dans la partie de l'emplanture (15) de l'aube.

10. Dispositif de mesure pour une balance de moment suivant la revendication 9, dans lequel le palier (21) lisse est disposé de manière à supporter l'aube (12) de turbine à mesurer dans la partie de la plateforme (15a) de l'aube.

11. Dispositif de mesure pour une balance de moment suivant l'une des revendications 1 à 7, dans lequel le logement (11) de mesure a une ouverture (30) s'étendant verticalement pour une aube (28) de compresseur, des paliers (31) lisses étant disposés le long de l'ouverture (30) du logement.

12. Dispositif de mesure pour une balance de moment suivant l'une des revendications 1 à 7, dans lequel le centre de gravité d'une aube (12) de turbine insérée se trouve sensiblement au dessus du centre de gravité du dispositif de mesure.

13. Bascule de moment ayant au moins un dispositif de mesure suivant l'une des revendications 1 à 12.

14. Bascule de moment suivant la revendication 13,
ayant trois cellules de bascule qui sont disposées suivant un triangle isocèle.

15. Bascule de moment suivant la revendication 14,
dans laquelle l'objet (12, 28) à mesurer est, dans la position de mesure, orienté le long de la médiatrice de la base du triangle isocèle.
